# EUROPEAN PATENT APPLICATION

(11) **EP 2 985 653 A2**
(43) Date of publication of application: **17.02.2016**
(21) Application number: 15181062.9
(22) Date of filing: 14.08.2015
(51) Int. Cl.: G02F 1/1333, G02F 1/13363

(54) **OUTDOOR DISPLAY DEVICE**

(30) Priority: 14.08.2014 KR 20140106007
(71) Applicant: Samsung Electronics Co., Ltd., Suwon-si, Gyeonggi-do (KR)
(72) Inventor: PYO, Jin Soo, Seoul (KR); KIM, Jung Kyun, Gyeonggi-do (KR); CHO, Jin Hyun, Seoul (KR)
(74) Representative: Walaski, Jan Filip

(57) **Abstract**

Disclosed herein is an outdoor display device capable of improving image visibility. The outdoor display device includes a housing unit having an opening in a front surface thereof, a glass unit in the opening of the housing unit, and a display unit in the housing unit, and including a liquid crystal display panel disposed in a rear of the glass unit to display an image, and the glass unit includes a transparent member, a polarizing film on a rear of the transparent member, and a λ/4 film on at least any one of the polarizing film and the liquid crystal display panel.

## Description

The present invention relates to an outdoor display device for use outdoors.

In general, display devices are devices for displaying an image on a screen. Various functions can be realized using the above display devices. A video wall function is one type of the display devices. Here, the video wall function serves to recognize or provide a plurality of display devices as one screen, and to enlarge and display an image by 1×4, 2×2, 3×3, 4×4.

The video wall function enlarges one screen to the plurality of display devices for a conference room, presentation, an exhibition room, traffic, stock, and/or the like, and thus, can be used to recognize an image displayed on a screen at a glance by a user. Recently, such a display device is frequently used for the purpose of advertising in the open air or the outdoors. When a user watches the above display devices including the video wall installed in the outside and covered by glass, visibility is greatly decreased by light reflected from a surface of the glass, i.e., a display surface.

Also, there is a problem of a blackening phenomenon in which liquid crystals become black by incident sunlight that may be greater than that caused by self-heating of the display according to an installation position. Such a blackening phenomenon is known to be generated by the outside temperature and a solar heat.

Additional aspects and/or advantages will be set forth in part in the description which follows and, in part, will be apparent from the description, or may be learned by practice of the embodiments.

Therefore, it is an aspect of the present embodiments to provide an outdoor display device capable of improving visibility.

It is another aspect of the embodiments to provide an outdoor display device capable of blocking sunlight.

It is still another aspect of the embodiments to provide an outdoor display device capable of improving maintenance.

It is yet another aspect of the embodiments to provide an outdoor display device capable of preventing a touch film pattern from being viewed by external light.

Additional aspects of the embodiments will be set forth in part in the description which follows and, in part, will be obvious from the description, or may be learned by practice of the embodiments.

In accordance with one aspect of the present embodiments, an outdoor display device includes a housing unit having an opening in a front surface thereof; a glass unit prepared or positioned in the opening of the housing unit; and a display unit prepared or positioned in the housing unit, and including a liquid crystal display panel disposed in a rear of the glass unit to display an image, and the glass unit includes a transparent member; a polarizing film prepared or positioned in a rear of the transparent member; and a λ/4 film prepared or positioned on at least any one of the polarizing film and the liquid crystal display panel.

The λ/4 film may include a first λ/4 film prepared on a rear surface of the polarizing film; and a second λ/4 film prepared in a front of the liquid crystal display panel.

The λ/4 film may polarize a light into a circular polarized light or an elliptical polarized light of 45° or 135° based on an axis of a light emitted from the polarizing film.

The polarizing film, the first λ/4 film, and the second λ/4 film may be sequentially disposed in the rear of the transparent member.

The glass unit may further include a low-reflection or anti-reflective (AR) film prepared in a front surface of the transparent member.

The polarizing film may have a light axis the same as that of a light passing through the liquid crystal display panel.

The liquid crystal display panel may include a reflection film prepared to decrease reflection of a light.

The display unit may include a plurality of display main bodies prepared to form a video wall outputting an image, and the plurality of display main bodies may include a display module prepared to display the image; and a frame prepared on the display module.

At least one of the polarizing film and the λ/4 film may be prepared to correspond to a bezel area included in an entire area of a display surface of the display module.

At least one of the polarizing film and the λ/4 film may be prepared to form an edge side portion of the display module.

The side portion may be coated with a coating solution including an anti-fingerprint (AF) solution and a lubricant solution.

The side portion may be formed by coating an AF solution and a lubricant solution on the at least any one of the polarizing film and the λ/4 film.

The glass unit may further include a touch film interposed between the λ/4 film and the liquid crystal display panel.

In accordance with another aspect of the present embodiments, an outdoor display device includes a housing unit having an opening in a front surface thereof; a transparent member prepared in the opening of the housing unit; a display unit prepared in the housing unit, and including a liquid crystal display panel disposed in a rear surface of the transparent member to display an image; and a film unit prepared inside the transparent member to block an external light, and the film unit includes a polarizing film prepared on the rear surface of the transparent member; and a λ/4 film prepared on the polarizing film and the liquid crystal display panel.

The λ/4 film may include a first λ/4 film prepared on a rear surface of the polarizing film; and a second λ/4 film prepared in a front of the liquid crystal display panel.

The polarizing film, the first λ/4 film, and the second λ/4 film may be sequentially disposed in a rear of the transparent member.

The transparent member may further include a low-reflection or anti-reflection (AR) film prepared in a front thereof.

The polarizing film may have a light axis the same as that of a light passing through the liquid crystal display panel.

The λ/4 film may polarize a light into a circular polarized light or an elliptical polarized light of 45° or 135° based on an axis of a light emitted from the polarizing film.

The liquid crystal display panel may include a reflection film prepared to decrease reflection of light.

The display unit may include a plurality of display main bodies prepared to form a video wall outputting an image, and the plurality of display main bodies may include a display module prepared to display the image; and a frame prepared in a rear of the display module.

At least any one of the polarizing film and the λ/4 film may be prepared to correspond to a bezel area included in an entire area of a display surface of the display module.

The at least one of the polarizing film and the λ/4 film may be formed greater than a surface area of an effective display area of the liquid crystal display panel and prepared to form a side portion of the display module.

The side portion of the display module may be coated with a coating solution including an anti-fingerprint (AF) solution and a lubricant solution.The film unit may further include a touch film interposed between the λ/4 film and the liquid crystal display panel.

In accordance with one aspect of the embodiments an outdoor display includes a video wall having a housing with an opening, display panels positioned adjacently in the opening, glass in the housing in front the display panels and a film applied to the glass that reduces light reflection and circularly polarizes light.

The film may include an anti reflection film on one side of the glass, a polarizing film on another side of the glass, and a retardation wave film on the polarizing film.

The polarizing film polarizes outside light into a first polarization, a first λ/4 film of the retardation film circularly polarizes light from the polarizing film, light reflected from a second λ/4 film of the retardation film is polarized into a second polarization perpendicular to the first polarization blocking external light reflected from the display panel from exiting the housing unit.

These and/or other aspects of the embodiments will become apparent and more readily appreciated from the following description of the embodiments, taken in conjunction with the accompanying drawings in which:
FIG. 1 is a perspective view briefly illustrating an outdoor display device according to an embodiment;
FIG. 2 is a cross-sectional view briefly illustrating an outdoor display device forming a video wall according to an embodiment;
FIG. 3 is an enlarged view illustrating a portion 'A' of FIG. 2;
FIG. 4 is a view briefly illustrating a glass unit according to another embodiment;
FIG. 5 is an enlarged view illustrating a portion 'B' of FIG. 2;
FIG. 6 is a view briefly illustrating a display main body forming a video wall according to an embodiment;
FIG. 7 is a view briefly illustrating a chassis of a display main body forming a video wall according to another embodiment;
FIG. 8 is a view briefly illustrating a film chassis of the display main body forming the video wall according to the embodiment;
FIG. 9 is a view briefly illustrating an operation of attaching the film chassis onto the display main body forming the video wall according to the embodiment; and
FIG. 10 is a view briefly illustrating an operation of coating a side portion of a display main body forming a video wall according to another embodiment.

Reference will now be made in detail to the embodiments, examples of which are illustrated in the accompanying drawings, wherein like reference numerals refer to the like elements throughout. The embodiments are described below to explain them by referring to the figures.

Hereinafter, an outdoor display device according to an embodiment will be described with reference to the following drawings.

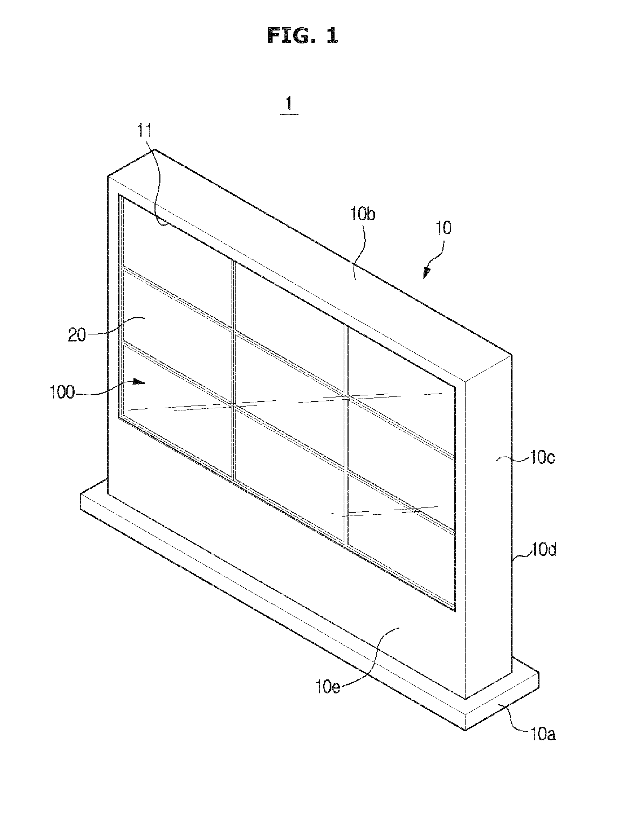

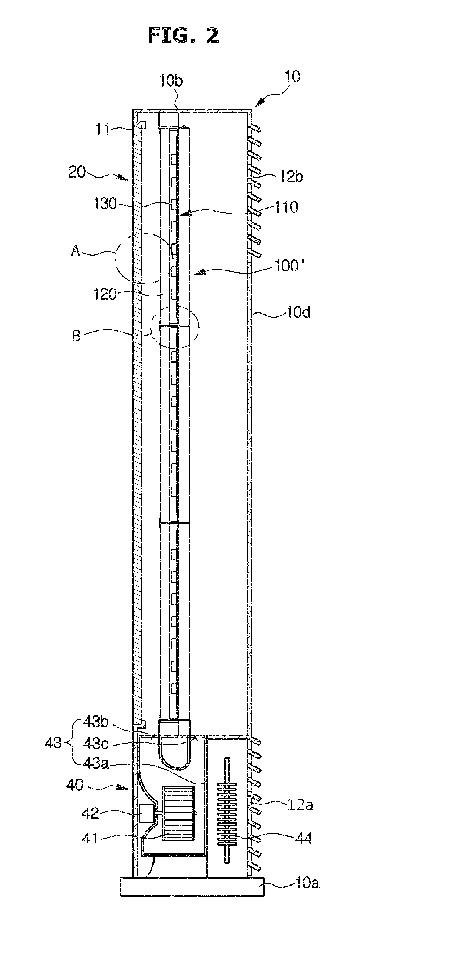

As shown in FIGS. 1 and 2, an outdoor display device 1 includes a housing unit 10 forming an appearance in which an opening 11 is formed in the front thereof, a glass unit 20 disposed in the opening 11 of the housing unit 10, and a display unit 100 provided to display an image inside the housing unit 10.

The housing unit 10 includes a bottom surface 10a, an upper surface 10b, both side surfaces 10c, and a rear surface 10d to be installed in the outdoors, and the opening 11 may be form at least a part of a front surface 10e thereof. In the embodiment, the opening 11 is provided on a part of an upper side of the front surface 10e of the housing unit 10, and the glass unit 20 is prepared or positioned on at least a part of the front surface 10e, but this aspect of the present embodiment should not limited thereto. For example, the front surface 10e may be entirely formed as an opening 11, and the glass unit 20 may be formed on the entire housing unit 10.

The glass unit 20 in the opening 11 in the front of the housing unit 10 may include a transparent member having high hardness, such as a tempered glass, and be formed of a transparent material.

The glass unit 20 is formed to have a size corresponding to the display unit 100 inside the housing unit 10, and an image displayed on the display unit 100 mounted inside the housing unit 10 is viewed from the outside.

The display unit 100 may include a plurality of display main bodies 100' to form a video wall.

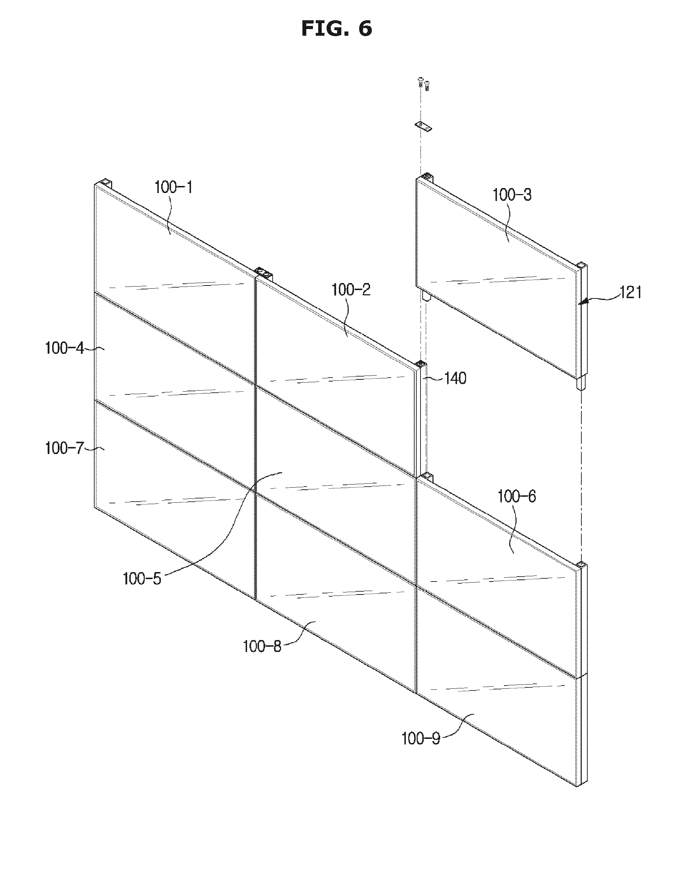

For example, the plurality of display main bodies 100' may be arranged in a 3×3 shape. That is, three display main bodies 100' in a longitudinal direction and three display main bodies 100' in a lateral direction may be disposed. The above is an example for convenience of description, and the number and arrangement shape of the all display bodies 100' forming the video wall system may be variously changed (see FIG. 6).

The display main bodies 100' forming the above video wall each include a display module 110 prepared or designed to display an image and a frame 132 prepared to support a rear of the display module 110.

The display module 110 includes a liquid crystal display panel 120 prepared or designed to display the image and a backlight unit 130 disposed in a rear of the liquid crystal display panel 120 and projecting a light to the liquid crystal display panel 120. Meanwhile, in the outdoor display device 1, an inside thereof may be degraded by a heat generated from the display main bodies 100' inside the housing unit 10 and a heat generated from external sunlight.

Thus, in the housing unit 10, an air circulation device 40 may be provided to maintain an internal temperature of the housing unit 10 in a predetermined range by circulating external air inside the housing unit 10.

In order to circulate the external air inside the housing unit 10 by the air circulation device 40, an inlet 12a through which air flows into the housing unit 10 is prepared (arranged) on a lower portion of the rear surface of the housing unit 10, and an outlet 12b through which air circulated in the housing unit 10 is discharged is prepared on an upper portion of the rear surface.

Also, a heater 44 provided to heat the air inflow through the inlet 12a and prevent freezing of liquid crystals of the liquid crystal display panel 120 in a low temperature period such as winter may be disposed.

The air circulation device 40 is disposed on a lower portion of the inside of the housing unit 10, and includes a blowing fan 41 which is rotated and generates a suction force and a blowing force, a motor 42 which generates a rotary power and rotates the blowing fan 41, and a guide duct 43 including the blowing fan 41 inside thereof and guiding the air inflow into the blowing fan 41 and the air outflow from the blowing fan 41, so that external air flows into the housing unit 10 through the inlet 12a and is circulated inside the housing unit 10 via an air path passing on both sides of the display module 110 and then is discharged through the outlet 12b, allowing sunlight induced heat and self heating to be discharged.

The guide duct 43 may include an inflow opening 43a prepared in an axial direction of the blowing fan 41 and flowing the air inflow through the inlet 12a of the housing unit 10 into the blowing fan 41, and outflow openings 43b and 43c prepared on the outer side of a radial direction of the blowing fan 41 and transmitting the air outflow from the blowing fan 41 toward the display main body 100'.

In the embodiment, the outflow openings 43b and 43c includes a first outflow opening 43b configured to discharge air through a space between the glass unit 20 and the liquid crystal display panel 120 and a second outflow opening 43c configured to discharge air through a space of a rear side of the display module 110. Thus, the air outflow through the first outflow opening 43b passes through the space between the glass unit 20 and the liquid crystal display panel 120 and cools the liquid crystal display panel 120, thereby preventing degradation of the liquid crystal display panel 120, and the air outflow through the second outflow opening 43c passes through the space between the display module 110 and the rear surface 10d of the housing unit 10 and prevents overheating of the backlight unit 130 disposed in the rear of the liquid crystal display panel 120.

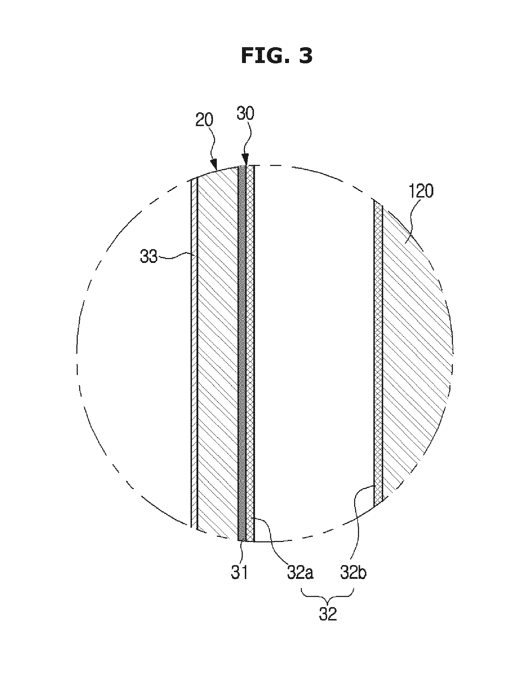

Meanwhile, as shown in FIG. 3, a polarizing film 31 and a λ/4 film 32 to block a reflected light by an external light are prepared or positioned on the glass unit 20. In the embodiment, the polarizing film 31 and the λ/4 film 32 are sequentially disposed on an inner surface of the glass unit 20. That is, in a proceeding direction of the sunlight, the polarizing film 31 is attached to the inner surface of the glass unit 20, and the λ/4 film 32 is attached to an inner surface of the polarizing film 31.

Also, a low-reflection or anti-reflection (AR) film 33 is attached to a front surface of the glass unit 20.

In the above structure, the AR film 33, the polarizing film 31, and the λ/4 film 32 are positioned on the glass unit 20, and form a film unit 30.

In the film unit 30, the AR film 33 on the front surface of the glass unit 20, and the polarizing film 31 and the λ/4 film 32 on the rear surface thereof may be preferably and sequentially attached.

The polarizing film 31 and the λ/4 film 32 may be formed to have an area more than or equal to an effective display area of the liquid crystal display panel 120, and have an area smaller than or equal to an area of the glass unit 20, and thus, transmittance of the reflected light reflected from the effective display area of the liquid crystal display panel 120 toward the outside may be efficiently blocked.

The polarizing film 31 is prepared to have the same light axis as that of the sunlight.

The λ/4 film 32 is a film in which an angle between the film and the polarization direction is cardinal numbers times λ/4. The λ/4 film 32 may polarize a light into a circular polarized light or an elliptical polarized light of 45° or 135° based on an axis of the light emitted from the polarizing film 31.

Thus, the polarizing film 31 serves to transmit a polarized light of a specific polarization axis of polarized light of the sunlight and absorb the remainder thereof, and the λ/4 film 32 has the polarization axis inclined by 45° with respect to the polarization axis of the polarizing film 31.

The λ/4 film 32 includes a first λ/4 film 32a prepared on a rear surface of the polarizing film 31 of the glass unit 20 and a second λ/4 film 32b prepared on a front surface of the liquid crystal display panel 120.

An operation of the polarizing film 31 and the λ/4 film 32 will be described below. Hereinafter, for convenience of description, the polarization axis of the polarizing film 31 is referred to as a Y-axis, and a polarization axis perpendicular to the polarization axis of the polarizing film 31 is referred to as an X-axis.

When the sunlight is incident into the glass unit 20 of the outdoor display device 1 disposed in the outdoors, a portion of the sunlight is reflected from the AR film 33 disposed on the front surface of the glass unit 20, and the remainder of the sunlight passes through the glass unit 20 and is incident into the polarizing film 31. The polarizing film 31 transmits only a Y-axis polarized light corresponding to the polarization axis of the polarizing film 31 which is the Y-axis and absorbs the remainder thereof. The polarized light passed through the polarizing film 31 is incident into the first λ/4 film 32a, and passes through the first λ/4 film 32a to be changed into a circular polarized light.

The circular polarized light passed through the first λ/4 film 32a is reflected from the second λ/4 film 32b prepared on the front of the liquid crystal display panel 120, and the reflected light in a circular polarized light shape is incident into the rear surface of the first λ/4 film 32a. Polarization of the reflected light incident into the first λ/4 film 32a is changed into the X-axis polarized light perpendicular to the polarization axis of the polarizing film 31 which is the Y-axis while passing through the first λ/4 film 32a. The reflected light changed into the X-axis polarized light is incident into the polarizing film 31, and the polarizing film 31 has the polarization axis, which is the Y-axis, and thus, all of the reflected light having the X-axis polarized light is reflected from the polarizing film 31.

Thus, even when the sunlight reaches the liquid crystal display panel 120 by passing through the glass unit 20, all of the reflected light reflected from the liquid crystal display panel 120 is absorbed by the polarizing film 31, and thus, is not transmitted to the outside of the glass unit 20. Thus, visibility of the image displayed on the liquid crystal display panel 120 can be improved.

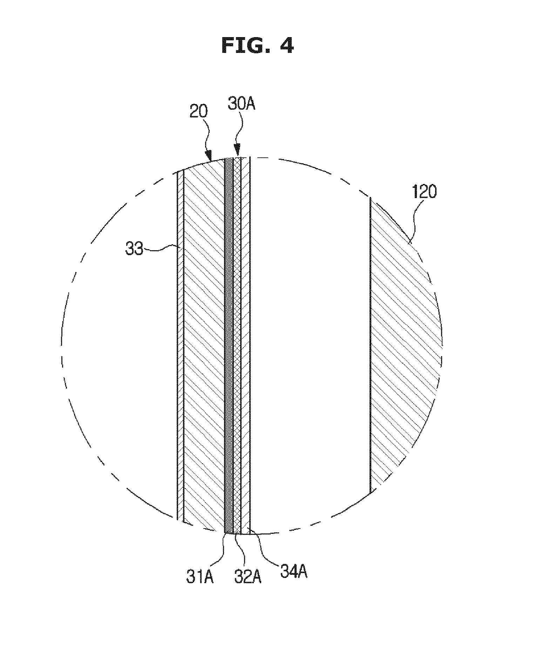

Also, as shown in FIG. 4, a glass unit 30A of an outdoor display device 1 according to another embodiment may further include a touch film 34A capable of having a touch function.

The touch film 34A may be disposed on an inner surface of the glass unit 30A. The touch film 34A may be interposed between a λ/4 film 32A and a liquid crystal display panel 120.

A polarizing film 31A and the λ/4 film 32A may be sequentially disposed on an inner surface of the glass unit 30A, and the touch film 34A may preferably be disposed on an inner surface of the λ/4 film 32A.

A display of a pattern of the touch film 34A by reflection of sunlight is minimized by the above polarizing film 31A and the λ/4 film 32A, thereby improving visibility.

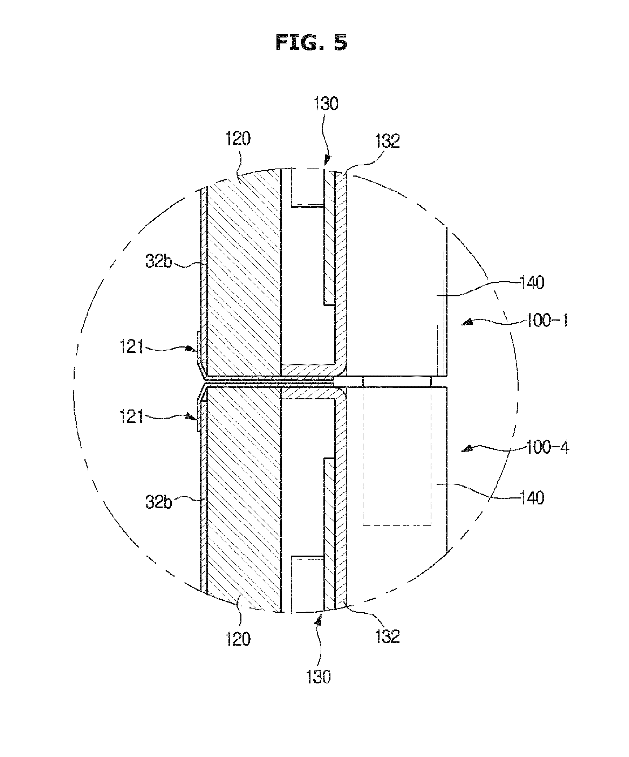

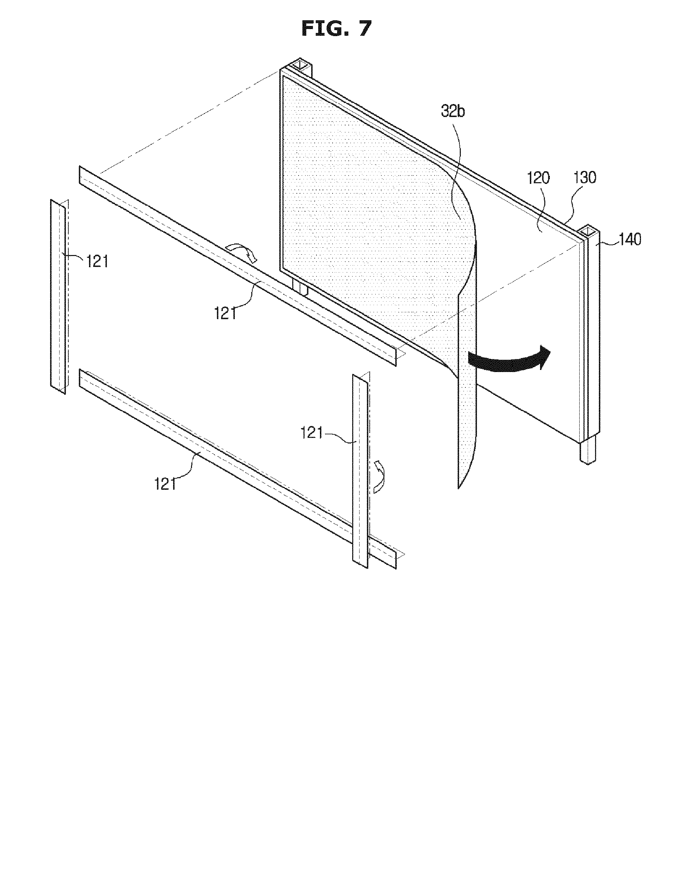

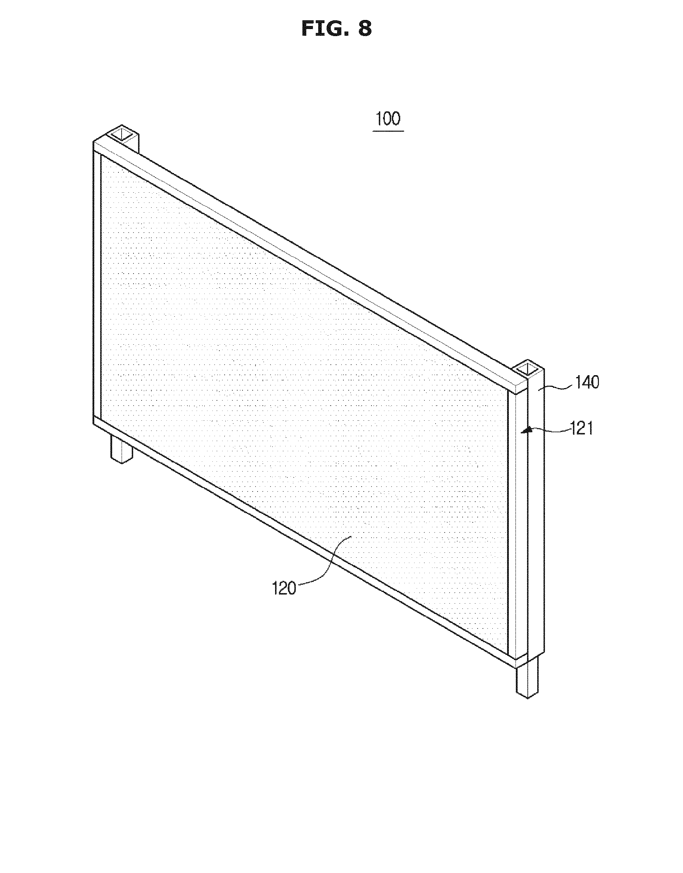

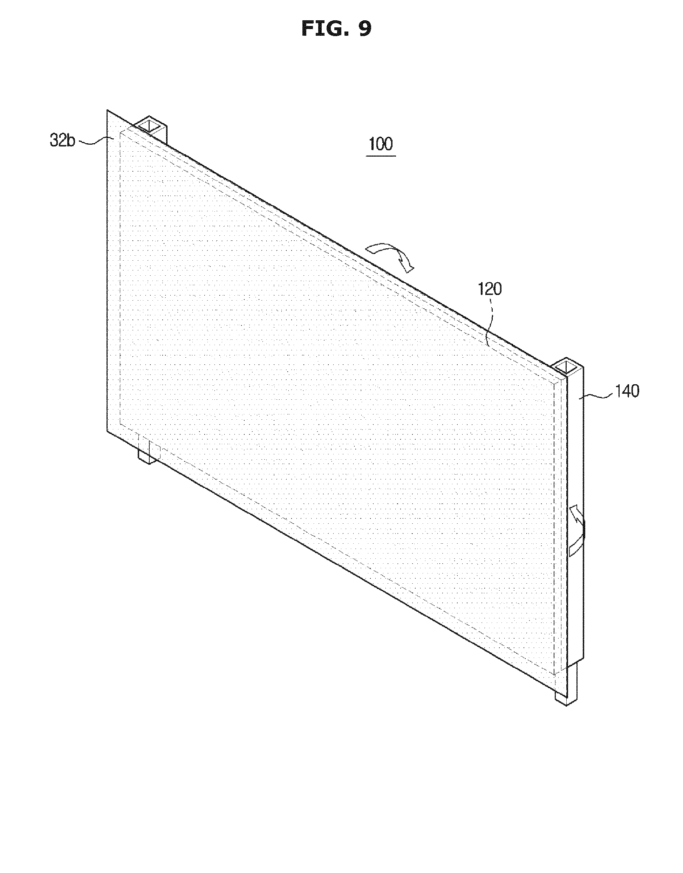

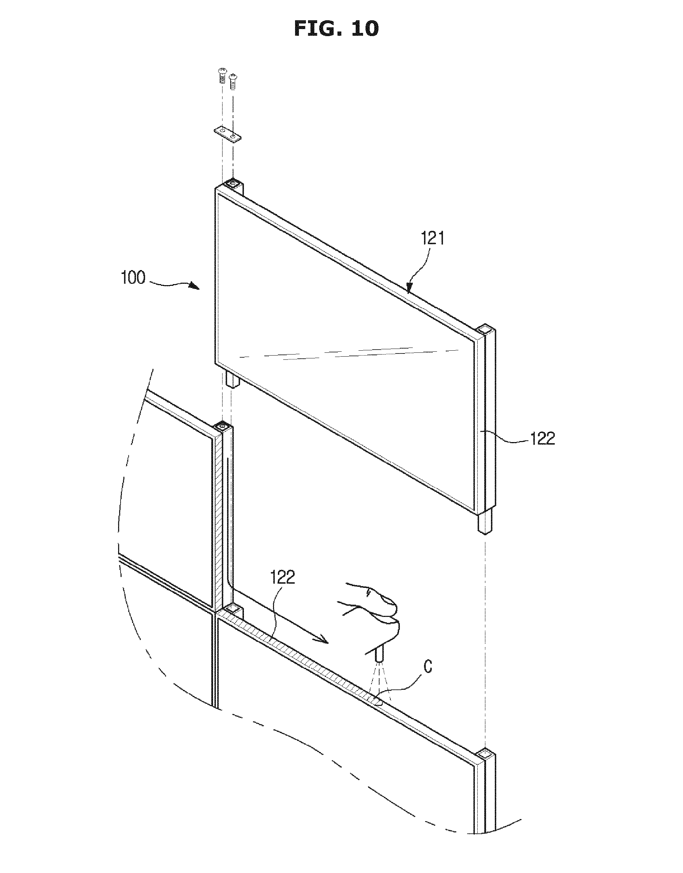

FIGS. 5 and 6 are views briefly illustrating a display main body forming a video wall according to an embodiment, and FIGS. 7 to 9 are views briefly illustrating a chassis of a display main body forming a video wall according to another embodiment, and FIG. 10 is a view briefly illustrating an operation of coating a side portion of a display main body forming a video wall according to another embodiment.

As shown in FIGS. 5 and 6, a display main body 100' forming the video wall of the embodiment includes a display module 110 configured to display image information and a frame 132 disposed on an outer surface of the display module 110 and prepared to protect the display module 110 and electrical components inside thereof.

The display module no may include a liquid crystal display panel 120 configured to display an image, a backlight unit 130 disposed on the rear of the liquid crystal display panel 120 and projecting a light to the liquid crystal display panel 120, and a control unit (not shown) disposed on the rear of the backlight unit 130 and including a circuit board inside thereof to control an operation of the liquid crystal display panel 120 and the backlight unit 130.

The frame 132 is prepared to support the display module 110 from the rear of the display module 110.

Here, a bezel 121 forming edges of the display module 110 may be formed to include at least any one of a polarizing film 31 and a λ/4 film 32.

The film bezel 121 including the at least any one of the above polarizing film 31 and the λ/4 film 32 may be prepared or positioned by attaching each film to a portion of an area of the bezel 121 included in the entire area of the liquid crystal display panel 120.

Meanwhile, in the embodiment, the film bezel forming the bezel 121 is described to be the polarizing film 31 and the λ/4 film 32, but the aspect is not limited thereto. For example, a functional film having various functions may be attached to an edge of a front surface of the liquid crystal display panel 120. For example, the functional film may include an anti-electrostatic film, an anti-reflection film, and/or the like.

Also, as shown in FIG. 10, in the film bezel 121, the λ/4 film 32 prepared on the front of the liquid crystal display panel 120 may be prepared larger than an effective display area of the liquid crystal display panel 120, and may surround an outer edge of the liquid crystal display panel 120.

The above λ/4 film 32 formed larger than the effective display area of the liquid crystal display panel 120 may form a side portion 122 of the display module 110.

Meanwhile, a plurality of display main bodies 100' forming the video wall may include first to ninth display main bodies 100', and a first display main body 100', a second display main body 100', and a third display main body 100' may be mounted to be contact with each other in a lateral direction, and the first display main body 100', a fourth display main body 100', and a seventh display main body 100' may be mounted to be contact with each other in a longitudinal direction.

Here, the film bezel 121 forming the side portion 122 of the display module 110 may decrease an interval between the display main bodies 100', and thus, an interface area between the display main bodies 100' may be decreased.

Also, the film bezel 121 realizes or produces a diffused image and diffused color in an area out of the effective display area of the liquid crystal display panel 120, and can improve product quality.

Meanwhile, the plurality of display main bodies 100' may be combined by a connection member 140 (see FIG. 5) prepared or positioned on a rear surface of each frame 132. In the embodiment, the connection member 140 is a connection bar on a rear surface of the display main body 100', a bolt configured to fix the connection bar, and/or the like, but the aspect of the present embodiment is not limited thereto. For example, the connection member may include a structure configured to connect between the display main bodies.

In the plurality of the above display main bodies 100' forming the video wall, when a display module 110 is broken and replaced, display main bodies 100' mounted adjacent thereto should be separated. For example, in order to replace the seventh display main body 100' of FIG. 6, the first display main body 100' and the fourth display main body 100' mounted above the seventh display main body 100' should be separated and transported.

Here, in order to easily transport between the display main bodies 100', as shown in FIG. 10, a coating solution C including an anti-fingerprint (AF) solution and a lubricant solution may be coated on the side portion 122 of the display module 110, and thus, a friction between the display main bodies 100' may be greatly decreased.

Meanwhile, the side portion 122 of the display module 110 may be formed using a film bezel 121 on which the coating solution C including the AF solution and the lubricant solution is coated.

Thus, when the side portion 122 of the display module 110 is coated with the coating solution C and the friction is decreased, the display main body 100' may be easily transported using a slip phenomenon.

As is apparent from the above description, an outdoor display device according to one embodiment can block reflected light and improve visibility.

Also, sunlight can be blocked, and a problem of increasing temperature can be solved. Also, a touch film pattern can be prevented from viewing by external light.

Also, maintenance can be improved, and durability of a product can be improved.

Although a few embodiments have been shown and described, it would be appreciated by those skilled in the art that changes may be made in these embodiments without departing from the principles invention, the scope of which is defined in the claims.

## Claims

1. An outdoor display device comprising:
a housing unit having an opening in a front surface thereof;
a glass unit in the opening of the housing unit; and
a display unit in the housing unit and including a liquid crystal display panel disposed at a rear of the glass unit to display an image,
wherein the glass unit includes:
a transparent member;
a polarizing film at a rear of the transparent member; and
a λ/4 film on one or both of the polarizing film and the liquid crystal display panel.

2. The outdoor display device of claim 1, wherein the λ/4 film comprises:
a first λ/4 film on a rear surface of the polarizing film; and
a second λ/4 film at a front of the liquid crystal display panel.

3. The outdoor display device of claim 1 or 2, wherein the λ/4 film polarizes light into circular polarized light or elliptical polarized light of 45° or 135° based on an axis of light emitted from the polarizing film.

4. The outdoor display device of claim 2 or 3, wherein the polarizing film, the first λ/4 film, and the second λ/4 film are sequentially disposed at the rear of the transparent member.

5. The outdoor display device of any one of the preceding claims, wherein the glass unit further comprises a low-reflection (AR) film on a front surface of the transparent member.

6. The outdoor display device of any one of the preceding claims, wherein the polarizing film has a light axis the same as that of light passing through the liquid crystal display panel.

7. The outdoor display device of any one of the preceding claims, wherein the liquid crystal display panel comprises a reflection film arranged to decrease reflection of light.

8. The outdoor display device of any one of the preceding claims, wherein the display unit comprises a plurality of display main bodies arranged to form a video wall for outputting an image,
wherein the plurality of display main bodies comprise:
a display module arranged to display the image; and
a frame on the display module.

9. The outdoor display device of claim 8, wherein at least any one of the polarizing film and the λ/4 film is arranged to correspond to a bezel area included in an entire area of a display surface of the display module.

10. The outdoor display device of claim 8, wherein one or both of the polarizing film and the λ/4 film forms an edge side portion of the display module.

11. The outdoor display device of claim 10, wherein the side portion is coated with a coating solution including an anti-fingerprint (AF) solution and a lubricant solution.

12. The outdoor display device of claim 10, wherein the side portion is formed by coating an AF solution and a lubricant solution on one or both of the polarizing film and the λ/4 film.

13. The outdoor display device of any one of the preceding claims, wherein the glass unit further comprises a touch film interposed between the λ/4 film and the liquid crystal display panel.
